# EUROPÄISCHE PATENTSCHRIFT

(11) **EP 3 141 444 B1**
(45) Veröffentlichungstag und Bekanntmachung des Hinweises auf die Patenterteilung: **31.01.2018**
(21) Anmeldenummer: 16001259.7
(22) Anmeldetag: 03.06.2016
(51) Int. Cl.: B60W 20/12, B60W 10/06, B60W 10/08

(54) **VERFAHREN UND VORRICHTUNG ZUM BETRIEB EINES HYBRIDFAHRZEUGS**
METHOD AND DEVICE FOR OPERATING A HYBRID VEHICLE
PROCEDE ET DISPOSITIF DESTINES AU FONCTIONNEMENT D'UN VEHICULE AUTOMOBILE HYBRIDE

(30) Priorität: 20.06.2015 DE 102015007907
(43) Veröffentlichungstag der Anmeldung: 15.03.2017
(73) Patentinhaber: MAN Truck & Bus AG, 80995 München (DE)
(72) Erfinder: Kirchensteiner, Elmar, 85256 Vierkirchen (DE); Müller, Bernd, 80689 München (DE)
(74) Vertreter: v. Bezold & Partner Patentanwälte - PartG mbB

(56) Entgegenhaltungen:
- EP-A2- 1 316 447
- DE-A1-102005 047 940
- DE-A1-102012 201 111
- GB-A- 2 495 886

## Beschreibung

Die Erfindung betrifft ein Verfahren zum Betrieb eines Kraftfahrzeugs, das von einem hybridisierten Antriebsstrang, umfassend einen von einem Abgasturbolader aufgeladenen Verbrennungsmotor und eine von einem elektrischen Energiespeicher gespeiste elektrische Maschine, angetrieben wird. Die Erfindung betrifft insbesondere ein derartiges Verfahren, um ein verzögertes Hochlaufen des Abgasturboladers (sog. Turboloch) zu vermeiden.
Durch stetig strenger werdende Abgasgesetzgebungen und Forderungen der Fahrzeughalter nach reduzierten Betriebskosten werden an Kraftfahrzeuge zunehmend hohe Anforderungen bezüglich ihres Kraftstoffverbrauchs und ihrer Schadstoffemissionen gestellt, während gleichzeitig ein hoher Fahrkomfort realisiert werden soll. Um diese Ziele zu erreichen, nimmt die Hybridisierung des Antriebsstrangs einen zunehmend höheren Stellenwert ein.
Neben dem Erreichen einer Kraftstoffersparnis und der Minderung des CO2-Ausstoßes können in Hybridfahrzeugen durch die zusätzliche(n) elektrische(n) Maschine(n) und den damit zusätzlich gewonnen Freiheitsgraden auch den Fahrkomfort betreffende Vorteile erreicht werden. So kann die elektrische Maschine zum Beispiel dazu verwendet werden, das bei aufgeladenen Brennkraftmaschinen typischerweise auftretende Turboloch zu kompensieren. Der dadurch erreichte kontinuierliche Momentenaufbau führt zu einer zügigeren und gleichmäßigeren Beschleunigung des Fahrzeugs. Um diesen Vorteil nutzen zu können, wird allerdings eine nicht unerhebliche elektrische Energiemenge zum Betrieb der elektrischen Maschine benötigt. Die Aufgabe des für Hybridfahrzeuge erforderlichen Energiemanagements ist es, durch Bremsrekuperation bzw. durch einen generatorischen Betrieb der elektrischen Maschine stets genügend Energie im Energiespeicher für die Turbolochkompensation vorzuhalten. Dies führt nachteiligerweise dazu, dass zum einen Energie teilweise in ungünstigen Situationen "teuer" erzeugt werden muss und gleichzeitig eine gewisse Kapazität des Energiespeichers stets für die Turbolochkompensation reserviert ist und somit dieser Energieinhalt nicht für andere Zwecke zur Verfügung steht. Sorgt das Energiemanagement nicht für den Vorhalt der Energie, würde dies zu einem unerwünschten jeweils unterschiedlichen Fahrverhalten des Fahrzeugs beim Beschleunigen führen, je nachdem, ob genug Energie zur Turbolochkompensation vorhanden ist oder nicht.

Ein Verfahren zum Betrieb eines Kraftfahrzeugs gemäß dem Oberbegriff des Anspruchs 1 ist außerdem aus der GB 2 495 886 A1 bekannt. Es ist somit eine Aufgabe der Erfindung, die aus dem Stand der Technik bekannten Ansätze zur Reduzierung des Turbolochs unter Vermeidung der vorstehend beschriebenen Nachteile weiterzubilden.

Diese Aufgaben werden durch Verfahren und Vorrichtungen mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß einem ersten Gesichtspunkt der Erfindung wird ein Verfahren zum Betrieb eines Kraftfahrzeugs, das von einem hybridisierten Antriebsstrang angetrieben wird, bereitgestellt. Der Antriebsstrang des Hybridfahrzeugs umfasst einen von einem Abgasturbolader aufgeladenen Verbrennungsmotor bzw. eine Brennkraftmaschine und eine von einem Energiespeicher für elektrische Energie gespeiste elektrische Maschine. Das Verfahren umfasst die Schritte der Bestimmung mindestens einer Stelle auf einem vorausliegendem Streckenabschnitt des Fahrzeugs, an der voraussichtlich ein positiver Lastsprung an dem Verbrennungsmotor auftreten wird, wobei die mindestens eine Stelle in Abhängigkeit von Streckendaten des vorausliegenden Streckenabschnitts bestimmt wird. Anhand vorausschauender Streckeninformationen werden somit vorausschauend Situationen erkannt bzw. prädiziert, in denen ein sprunghafter Wechsel von niedrigen Antriebsdrehmomenten zu hohen Antriebsdrehmomenten bei normalem Fahrverhalten erwartet wird. Beispielsweise kann mittels der Streckendaten eine Stelle eines voraussichtlichen Lastsprungs anhand eines Beginns einer Steigung auf dem vorausliegenden Streckenabschnitt bestimmt werden. Der vorausliegende Streckenabschnitt kann ein Streckenabschnitt vorbestimmter Länge auf der eingestellten oder wahrscheinlichsten Fahrtroute sein, ausgehend von der aktuellen Fahrposition.

Das Verfahren umfasst ferner den Schritt der Durchführung einer Lastpunktanhebung des Verbrennungsmotors vor und vorzugsweise bis zum Erreichen der mindestens einen Stelle, um ein verzögertes Hochlaufen des Abgasturboladers beim Lastsprung zumindest teilweise zu reduzieren. Die Lastpunktanhebung des Verbrennungsmotors stellt hierbei sowohl Leistung zur vollständigen Erfüllung des positiven Fahrerwunschmomentes als auch zum gleichzeitigen Laden des elektrischen Energiespeichers über einen generatorischen Betrieb der elektrischen Maschine bereit.

Ein positiver Lastsprung entspricht einem Wechsel von einer ersten Lastphase (Niedriglastphase) zu einer höheren, zweiten Lastphase (schwere Lastphase), wobei die Differenz zwischen den Lastanforderungen der Lastphasen vorzugsweise einen vorbestimmten Schwellenwert überschreitet. Oder mit anderen Worten entspricht ein positiver Lastsprung einem positiven Sprung zwischen zwei stationären Betriebszuständen unter Zunahme der Betriebslast, was einer sprunghaften Zunahme der Lastanforderung bzw. Lastaufschaltung an dem Verbrennungsmotor, d. h. einem sprunghaften Wechsel von niedrigen zu hohen Antriebsmomentenanforderungen, entspricht. In diesem Dokument wird statt des Begriffs Drehmoment auch gleichbedeutend der Begriff Moment benutzt.

Die Erfindung beschreibt somit ein Verfahren zur vorausschauenden Konditionierung des Abgasturboladers in einem Hybridfahrzeug, wobei durch eine unmittelbar vor dem Lastwechsel durchgeführte Lastpunktanhebung des Verbrennungsmotors mittels eines generatorischen Betriebs der elektrischen Maschine der Verbrennungsmotor bewusst belastet und der Turbolader somit aufgeladen wird. Dadurch erhöht sich das Drehmoment, nicht jedoch die Drehzahl des Verbrennungsmotors. Tritt der prädizierte Lastsprung schließlich ein, steht nicht nur ein aufgeladener Turbolader mit höherer Drehzahl und höherer Abgasenthalpie zur Verfügung, sondern die Brennkraftmaschine liefert durch die Lastpunktanhebung bereits ein höheres Moment. Die zu überwindende Momentendifferenz zwischen aktuell abgegebenem Moment und Zielmoment ist demnach geringer als im konventionellen Betrieb.

Der bekannte Nachteil einer Dynamikverzögerung des aufgeladenen Verbrennungsmotors durch das verzögerte Hochlaufen des Turboladers (sog. Turboloch), d. h. des langsamen bzw. verzögerten Momentenaufbaus nach Teillastbetrieb von Brennkraftmaschinen, wird somit erfindungsgemäß durch die Initiierung der Lastpunktanhebung mittels der elektrischen Maschine eines Hybridfahrzeugs unmittelbar vor dem Wechsel zu hohen Antriebsmomenten beseitigt oder zumindest reduziert. Die durch die während der Lastpunktanhebung generatorisch arbeitende elektrische Maschine erzeugte elektrische Energie wird in einem elektrischen Energiespeicher zwischengespeichert und steht dem Antriebsstrang für eine spätere Nutzung zur Verfügung. Das verzögerte Hochlaufverhalten des Turboladers kann somit ausgeglichen werden, ohne dabei elektrische Energie ausgeben zu müssen. Im Gegenteil wird der elektrische Energiespeicher durch die Lastpunktanhebung vielmehr geladen.

Gemäß einer bevorzugten Ausführungsform wird die Lastpunktanhebung bis zum Erreichen oder bis kurz vor Erreichen der Stelle des jeweils vorhergesagten Lastsprungs aufrechterhalten und dann beendet. Ferner wird vorzugsweise für jede der bestimmten Lastsprungstellen ein Startpunkt berechnet, an dem die Lastpunktanhebung gestartet wird. Hierbei kann mittels GPS-Daten die aktuelle Fahrzeugposition bestimmt werden und hieraus der Abstand und/oder die Zeit bis zum Erreichen der nächsten Stelle eines positiven Lastsprungs. Abhängig von der gewünschten bzw. berechneten Dauer der Lastpunktanhebung kann dann der Ort und/oder der Zeitpunkt zur Initiierung der Lastpunktanhebung bestimmt werden.

Gemäß einer besonders bevorzugten Ausführungsform kann das Verfahren wahlweise entweder einen an sich bekannten Boost-Betrieb der elektrischen Maschine ab Beginn des Lastsprungs bzw. der Schwerlastphase zur Reduzierung des Turbolochs durchführen oder eine Lastpunktanhebung vor Erreichen des Stelle des Lastsprungs, wie in diesem Dokument beschrieben. Gemäß dieser Ausführungsvariante wird die Lastpunktanhebung der Brennkraftmaschine zur Reduzierung des Turbolochs nur durchgeführt, falls ein aktuelles Speicherniveau des elektrischen Energiespeichers einen vorbestimmten Ladezustandsschwellenwert unterschreitet und/oder im vorausliegenden Streckenabschnitt durch eine Betriebsstrategie oder ein Energiemanagement des Kraftfahrzeugs eine andere Verwendung der im elektrischen Energiespeicher gespeicherten Energie vorhergesagt wird. Andernfalls, d. h. wenn das aktuelle Speicherniveau des elektrischen Energiespeichers größer gleich dem vorbestimmten Ladezustandsschwellenwert ist, z. B. wenn der Traktionsenergiespeicher nahezu vollständig geladen ist und/oder im vorausliegenden Streckenhorizont keine Situation zum sinnvollen Einsatz der gespeicherten Energie zu erwarten ist, wird anstelle der Lastpunktanhebung ein Boost-Betrieb der elektrischen Maschine mit Beginn des Lastsprungs gestartet, um das verzögertes Hochlaufen des Abgasturboladers beim Lastsprung zumindest teilweise zu reduzieren. Diese Ausführungsform bietet den Vorzug, dass für eine bestimmte Betriebssituation jeweils das geeignetste Verfahren zur Turbolochkompensation eingesetzt werden kann. Das Kriterium, dass im vorausliegenden Streckenhorizont keine Situation zum sinnvollen Einsatz der gespeicherten Energie zu erwarten ist, ist beispielsweise dann erfüllt, wenn die vorausliegende Strecke z. B. vorwiegend Gefälleabschnitte umfasst, d. h. wenn z. B. ein Wert für ein Durchschnittsgefälle in einem vorausliegenden Streckenabschnitt vorbestimmter Länge einen vorbestimmten Schwellenwert überschreitet. In diesem Fall ist für den Vortrieb kein oder nur ein sehr geringes Antriebsmoment notwendig. Die gespeicherte elektrische Energie kann somit nicht in der elektrischen Maschine zur Traktionsmomenterzeugung eingesetzt werden. Im Gegenteil verhindert ein geladener Energiespeicher hier sogar die mögliche Rekuperation der potentiellen Energie durch die elektrische Maschine.

Bei einem an sich bekannten sog. Boost-Betrieb der elektrischen Maschine unterstützt ein motorischer Betrieb der elektrischen Maschine temporär den Verbrennungsmotor, so dass die Summenantriebsleistung über der Leistung liegt, die aktuell allein durch den Verbrennungsmotor bereitgestellt werden kann.

Eine weitere vorteilhafte Ausführungsvariante der Erfindung sieht vor, dass nach der Lastpunktanhebung, die vor Erreichen-der Stelle des Lastsprungs durchgeführt wird, zusätzlich ein Boost-Betrieb der elektrischen Maschine mit Beginn des Lastsprungs gestartet wird, um so eine zusätzliche Beschleunigung des Verbrennungsmotors zu ermöglichen. Auf diese Weise kann beispielsweise die zuvor während der Lastpunktanhebung erzeugte elektrische Energie vollständig oder teilweise für eine zusätzliche Beschleunigung des Momentenaufbaus verwendet werden.

Vorzugsweise wird eine Dauer der Lastpunktanhebung und eine Höhe eines generatorischen Moments der elektrischen Maschine während der Lastpunktanhebung so bestimmt, dass der Abgasturbolader bei Eintritt des Lastsprungs bereits eine derart hohe Drehzahl aufgebaut hat, dass er unmittelbar einen Beitrag zur Erhöhung des Antriebsmoments des Hybridfahrzeugs liefert.

Bei einer weiteren vorteilhaften Variante der Erfindung wird eine in den Abgasturbolader durch die Lastpunktanhebung eingetragene Energie so berechnet, dass ein am Getriebeeingang wirkender bzw. vom Fahrer wahrnehmbarer Momentenaufbau nach Beginn des Lastsprungs gemäß einer vorgegebenen Kennlinie erfolgt.

Da in der Praxis bei einer sprunghaften Änderung der Sollmomentvorgabe eine korrespondierende Sprungantwort des Ist-Verlaufs des Momentenaufbaus nicht realisierbar ist, wird üblicherweise eine Kennlinie für den Momentenaufbau vorgeben, die sich der Sollmomentvorgabe möglichst stark annähern soll. Unter Verwendung eines Turboladermodells kann berechnet werden, welche Energie im Turbolader zu Beginn des Lastsprungs gespeichert sein muss, um den gewünschten Momentverlauf gemäß der Kennlinie zu erreichen. Folglich können eine Dauer der Lastpunktanhebung und eine Höhe eines generatorischen Moments der elektrischen Maschine während der Lastpunktanhebung so bestimmt werden, dass ein am Getriebeeingang wirkender Momentenaufbau nach Beginn des Lastsprungs gemäß der vorgegebenen Kennlinie erfolgt.

Die Streckendaten, die zur Bestimmung der Stellen, an denen voraussichtlich ein Lastsprung auftritt, verwendet werden, können topographische Streckeninformationen und/oder Gefälle-/Steigungsinformationen umfassen. Beispielsweise können derartige Streckeninformationen von einem Navigationsgerät bereitgestellt werden.

Bei einer Ausführungsvariante, bei der das Hybridfahrzeug ein Omnibus ist, vorzugsweise ein Linienbus, in dem eine Mehrzahl vorbestimmter Fahrstrecken oder Linien hinterlegt ist, kann im Fahrbetrieb mittels einer Linienerkennung die aktuelle Fahrstrecke oder Linie erkannt werden und die Stellen, an denen jeweils ein Lastsprung prädiziert wird, in Abhängigkeit von Streckendaten des vorausliegenden Streckenabschnitts der erkannten aktuellen Fahrstrecke bestimmt werden.

Gemäß einem zweiten Gesichtspunkt der Erfindung wird eine Steuervorrichtung zum Betrieb eines Hybridfahrzeugs bereitgestellt, wobei der Antriebsstrang des Hybridfahrzeugs einen von einem Abgasturbolader aufgeladenen Verbrennungsmotor und eine von einem elektrischen Energiespeicher gespeiste elektrische Maschine umfasst. Die Steuervorrichtung ist hierbei eingerichtet, das Verfahren, wie in diesem Dokument offenbart, durchzuführen. Zur Vermeidung von Wiederholungen sollen rein verfahrensgemäß offenbarte Merkmale auch als vorrichtungsgemäß, d. h. als Merkmale der Steuervorrichtung, offenbart gelten und beanspruchbar sein. Die Erfindung betrifft ferner ein Hybridfahrzeug, insbesondere Nutzfahrzeug, aufweisend eine derartige Steuervorrichtung.

Zusammengefasst kann durch das vorgeschlagene Betriebsverfahren eine Steigerung der Fahrzeugdynamik durch Ausgleichen der Trägheit des Turboladers erreicht werden, ohne dabei elektrische Energie einsetzen zu müssen. Das für Brennkraftmaschinen mit Turbolader typische Momentenplateau kann kompensiert werden, das auftritt, wenn der Turbolader noch keinen Beitrag zum Momentenaufbau leisten kann. Die Brennkraftmaschine kann durch die vorausschauende Lastpunktanhebung in einen Betriebspunkt gebracht werden, bei dem der Turbolader zum Zeitpunkt des positiven Lastsprungs bereits einen wesentlichen Beitrag zum Momentenaufbau liefert. Ferner kann die gewonnene Energie während der Lastpunktanhebungsphase zur Kompensation der Trägheit des Turboladers zusätzlich eingesetzt werden, um eine weitere Dynamiksteigerung zu erreichen.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: einen Drehmomentverlauf einer aufgeladenen Brennkraftmaschine zur Illustration eines sog. Turbolochs;
- Figur 2: ein Ablaufdiagramm zur Illustration der Schritte eines Verfahrens gemäß einer Ausführungsform der Erfindung;
- Figur 3: einen Drehmomentverlauf mit Lastpunktanhebung zur Aufladung des Turboladers gemäß einer Ausführungsform der Erfindung;
- Figur 4: einen Drehmomentverlauf mit Lastpunktanhebung zur Aufladung des Turboladers und anschließendem elektrischen Boosten gemäß einer Ausführungsform der Erfindung; und
- Figur 5: einen Drehmomentverlauf mit starker Lastpunktanhebung zur Aufladung des Turboladers gemäß einer weiteren Ausführungsform der Erfindung.

Gleiche oder funktional äquivalente Elemente, insbesondere Drehmomentverläufe, sind in allen Figuren mit denselben Bezugszeichen bezeichnet.

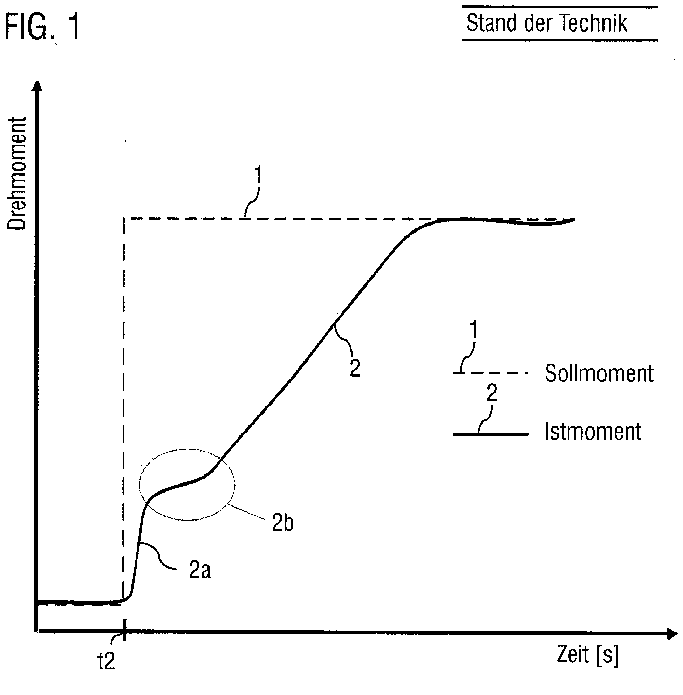

Figur 1 zeigt einen typischen Drehmomentverlauf eines aufgeladenen Verbrennungsmotors bei einem Lastsprung. Der Wechsel von einer Niedriglastphase bzw. Teillastbetrieb zu einer schweren Lastphase ist durch den sprunghaften Anstieg des Solldrehmoments des Verbrennungsmotors zum Zeitpunkt t2 in Form der gestrichelten Linie 1 dargestellt.

Der zeitliche Verlauf des Ist-Drehmoments des Verbrennungsmotors ist durch die mit dem Bezugszeichen 2 gekennzeichnete Kurve dargestellt. Im Abschnitt 2a folgt zunächst ein sog. Saugsprung 2a des Ist-Drehmoments. Anschließend verzögert sich der Anstieg des Ist-Drehmoments aufgrund des verzögerten Hochlaufens des Turboladers, der erst einen entsprechenden Druck aufbauen muss. Dies ist durch den Plateau-Bereich 2b dargestellt und wird bekanntermaßen als sog. Turboloch bezeichnet. Anschließend steigt das Ist-Drehmoment bis zum neuen Sollwert der Drehmomentvorgabe an.

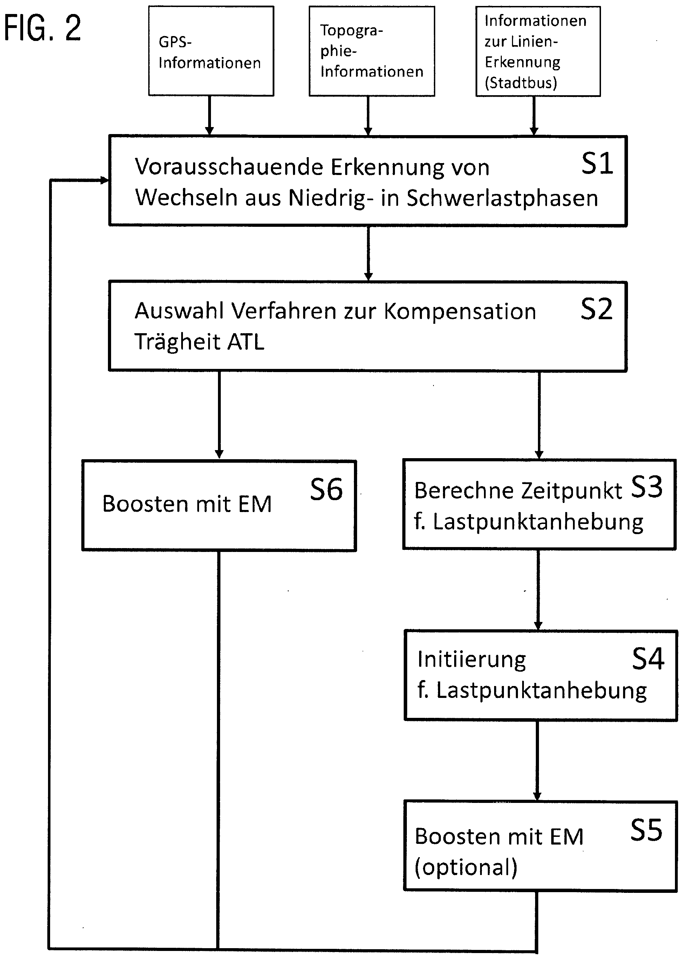

Figur 2 zeigt ein Ablaufdiagramm zur Illustration der Schritte eines Betriebsverfahrens für ein Hybridfahrzeug gemäß einer Ausführungsform der Erfindung. Der hybridisierte Antriebsstrang des Hybridfahrzeugs umfasst einen von einem Abgasturbolader aufgeladenen Verbrennungsmotor und eine von einem elektrischen Energiespeicher gespeiste elektrische Maschine.

In Schritt S1 erkennt die vorausschauende Betriebsstrategie des Hybridfahrzeugs alle Fahrsituationen im vorausliegenden Streckenhorizont, beispielsweise auf einem vorausliegenden Fahrtstreckenabschnitt der Länge von ca. 5km, bei denen von einer Niedriglastphase, d. h. der Verbrennungsmotor liefert ein geringes Drehmoment, in eine schwere Lastphase, d. h. der Verbrennungsmotor liefert ein hohes Drehmoment, gewechselt werden muss. Fahrsituationen, bei denen solche positiven Lastsprünge auftreten, sind beispielsweise Stellen auf der vorausliegenden Fahrtstrecke, an denen die Steigung der Fahrtstrecke stark zunimmt.

Die Erkennung dieser Fahrsituationen erfolgt typischerweise anhand von GPS-Daten in Verbindung mit einer topographischen Karte oder anhand einer anderweitigen Streckenerkennung, wie sie z. B. in Stadtbussen anhand einer Linienerkennung bekannt ist. Aus den Strecken- oder Topographiedaten kann direkt auf die Lastphasen geschlossen werden.

Um das träge Hochlaufverhalten des Turboladers bei dem Wechsel in die schwere Lastphase zu verhindern und somit einen zügigeren und gleichmäßigeren Momentenaufbau sicherzustellen, ermittelt die vorausschauende Betriebsstrategie in einem zweiten Schritt S2, wie die Trägheit des Turboladers kompensiert werden soll.

Dies kann entweder durch ein an sich bekanntes motorisches Boosten mit der elektrischen Maschine erfolgen oder durch das vorausschauende Aufladen des Abgasturboladers mittels einer Lastpunktanhebung vor Erreichen der Stelle des Lastsprungs.

Typischerweise wird das elektrische Boost-Verfahren nur dann ausgewählt, wenn der elektrische Energiespeicher nahezu vollständig geladen ist, bzw. wenn keine andere Situation im vorausliegenden Horizont durch das Energiemanagement ermittelt werden kann, an dem die bereits gespeicherte elektrische Energie sinnvoll eingesetzt werden kann. Ist dies der Fall, wird ab Beginn der Schwerlastphase (Zeitpunkt t2) ein motorischer Boost-Betrieb der elektrischen Maschine gestartet unter Verwendung von im Vorfeld rekuperierter Energie (Schritt S6).

In allen anderen Fällen wird das verzögerter Hochlaufen des Abgasturboladers durch die erfindungsgemäße Lastpunktanhebung kompensiert.

In diesem Fall wird zunächst in Schritt S3 der Zeitpunkt ermittelt, ab dem die Lastpunktanhebung t1 vor dem Wechsel in die schwere Lastphase initiiert wird. Gleichzeitig wird die Höhe der Lastpunktanhebung, sprich die Höhe des generatorischen Moments der elektrischen Maschine, berechnet. Die Berechnung erfolgt derart, dass der Turbolader bei Eintritt in die schwere Lastphase bereits eine so hohe Drehzahl aufgebaut hat, um unmittelbar einen Beitrag zur Erhöhung des Momentes liefern zu können. Je früher die Lastpunktanhebung initiiert wird und/oder je größer das generatorische Drehmoment der elektrischen Maschine ist , desto höher ist der während der Lastpunktanhebung erfolgende Energieeintrag in den Abgasturbolader.

Mittels eines Modells des Abgasturboladers, das angibt, wie der am Getriebe messbare Momentenaufbau abhängig von einem Energiezustand des Abgasturboladers beeinflusst wird, kann der während der Lastanhebung notwendige Energieeintrag in den Abgasturbolader berechnet werden, der zu einem gewünschten Momentenaufbau nach Beginn des Lastsprungs gemäß einer vorgegebenen Kennlinie führt. Aus dem berechneten Energieeintrag können dann der Zeitpunkt t1 und die Höhe des zu erzeugenden generatorischen Moments der elektrischen Maschine berechnet werden.

Die Einsteuerung der Lastpunktanhebung (Vorgabe des berechneten generatorischen Moments an die elektrische Maschine und Vorgabe des errechneten Momentes an den Verbrennungsmotor) erfolgt in einem vierten Schritt S4, sobald der im dritten Schritt S3 berechnete Zeitpunkt t1 erreicht ist. Tritt der prädizierte Lastsprung im Zeitpunkt t2 schließlich ein, steht nicht nur ein aufgeladener Turbolader zur Verfügung, sondern die Brennkraftmaschine liefert durch die Lastpunktanhebung bereits ein höheres Moment. Der bekannte Nachteil einer Dynamikverzögerung des aufgeladenen Verbrennungsmotors, d. h. eines langsamen bzw. verzögerten Momentenaufbaus 2b nach einem Teillastbetrieb des Verbrennungsmotors, wird somit durch die Lastpunktanhebung unmittelbar vor dem Wechsel zu hohen Antriebsmomenten beseitigt oder zumindest reduziert.

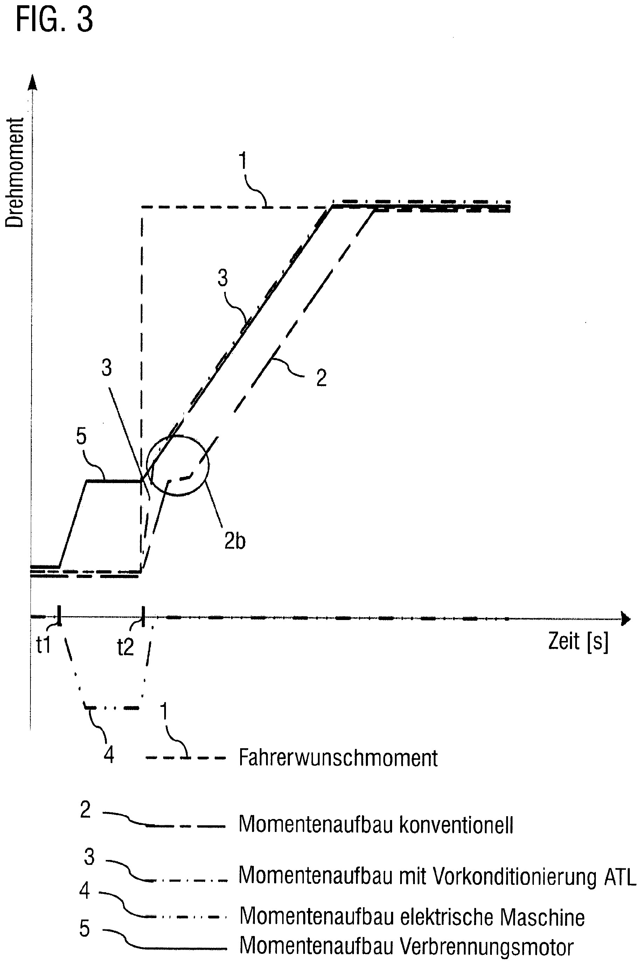

Dies ist in Figur 3 illustriert, die einen Drehmomentverlauf mit Lastpunktanhebung zur Aufladung des Turboladers gemäß einer Ausführungsform der Erfindung zeigt. Die gestrichelte Linie 1 zeigt den Verlauf des Fahrerwunschmoments, mit dem sprunghaften Anstieg zum Zeitpunkt t2, beispielsweise aufgrund des Einfahrens in eine Steigungsstrecke.

Zum Zeitpunkt t1, also vor Erreichen der Stelle, an der die Schwerlastphase beginnt, wird die Lastpunktanhebung initiiert. Bei der Lastpunktanhebung stellt der Verbrennungsmotor sowohl Leistung zur vollständigen Erfüllung des positiven Fahrerwunschmomentes als auch zum gleichzeitigen Laden des elektrischen Energiespeichers über einen generatorischen Betrieb der elektrischen Maschine bereit. Dies ist in Figur 3 durch den Anstieg des Drehmomentverlaufs des Verbrennungsmotors erkennbar, das mit der durchgezogenen Linie 5 dargestellt ist, sowie durch den korrespondierenden negativen Anstieg des Drehmoments an der elektrischen Maschine, was durch die Linie 4 dargestellt ist. Der korrespondierende Anstieg des Moments der elektrischen Maschine kompensiert somit gerade den Anstieg des Moments am Verbrennungsmotor, so dass die Drehzahl des Verbrennungsmotors konstant bleibt und der elektrische Energiespeicher durch die Lastpunktanhebung geladen wird.

Während der Phase der Lastpunktanhebung von t1 bis t2 erfolgt somit ein Energieeintrag E in den Abgasturbolader. Der Energieeintrag E korreliert mit der Fläche unter der Kurve 5 von den Zeitpunkten t1 bis t2. Die im Abgasturbolader gespeicherte Energie erhöht sich somit während der Lastpunktanhebungsphase durch eine Zunahme der Drehzahl des Abgasturboladers und durch eine Erhöhung dessen Temperatur bzw. der Abgasenthalpie.

Tritt der prädizierte Lastsprung schließlich zum Zeitpunkt t2 ein, steht einerseits der aufgeladene Turbolader zur Verfügung, andererseits liefert die Brennkraftmaschine durch die Lastpunktanhebung bereits ein höheres Moment.

Die zu überwindende Momentendifferenz zwischen aktuell abgegebenem Moment 3 und Zielmoment 1 ist im Zeitpunkt t2 demnach geringer als im konventionellen Betrieb. Dies ist in Figur 3 durch Vergleich der beiden Kurven 2 und 3 erkennbar. Die Linie 2 zeigt einen herkömmlichen Momentenaufbau, während die gestrichpunktete Linie 3 den Momentenaufbau zeigt, wenn eine erfindungsgemäße Aufladung des Abgasturboladers mittels der Lastpunktanhebung vor dem Zeitpunkt t2 erfolgt ist. Der Anstieg des am Getriebe wirksamen Moments mit Lastpunktanhebung (Kurve 3) erfolgt wesentlich schneller als ohne Lastpunktanhebung (Kurve 2).

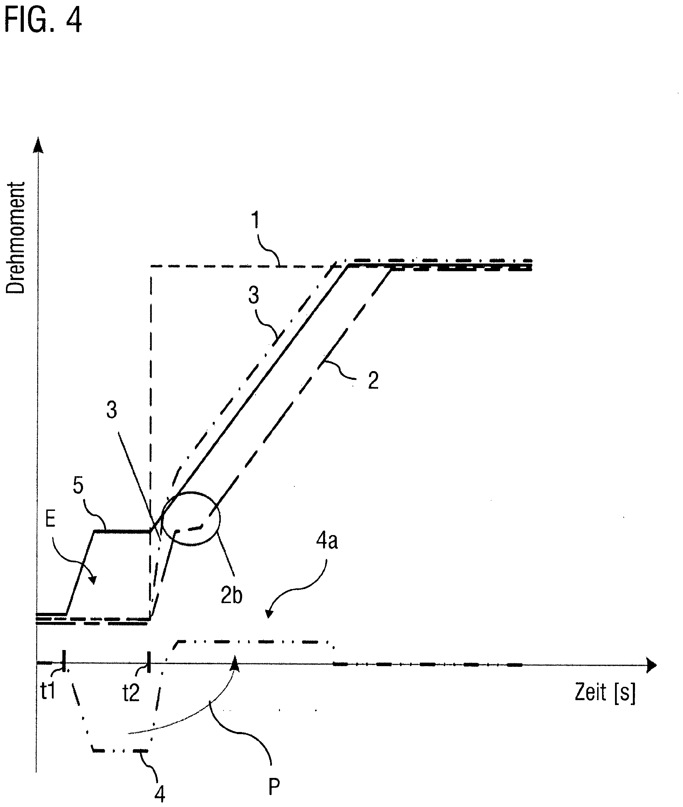

Optional kann die während der Lastpunktanhebung erzeugte elektrische Energie in einem fünften Schritt S5 vollständig oder teilweise eingesetzt werden, um mittels einer motorischen Boost-Funktion der elektrischen Maschine für eine zusätzliche Beschleunigung des Momentenaufbaus zu sorgen. Diese Variante ist in Figur 4 dargestellt. Der Unterschied zu der in Figur 3 dargestellten Variante liegt somit darin, dass sich an das Ende des generatorischen Betriebs der elektrischen Maschine mit Beendigung der Lastpunktanhebung zum Zeitpunkt t2 ein temporärer motorischer Betrieb 4a anschließt, bei dem die zuvor während der Lastpunktanhebung erzeugte und im elektrischen Energiespeicher zwischengespeicherte elektrische Energie für den Boost-Betrieb 4a verwendet wird, was durch den Pfeil P schematisch illustriert ist. Dadurch kann ein noch schnellerer Momentenaufbau 3 erfolgen.

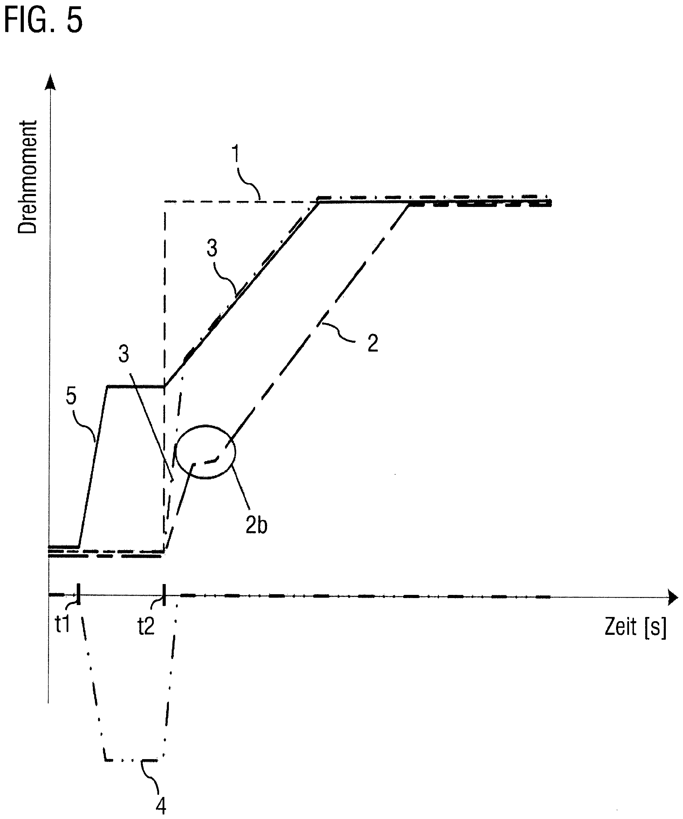

Figur 5 illustriert den Drehmomentverlauf gemäß einer weiteren Ausführungsform der Erfindung. Hierbei kann das Energiemanagement die Brennkraftmaschine durch eine im Vergleich zur Figur 3 stärkere Lastpunktanhebung bereits in einen Betriebspunkt bringen, bei dem der Turbolader bereits einen wesentlichen Beitrag zum Momentenaufbau liefert. Beim Eintritt in die schwere Lastphase steht unmittelbar ein wesentlich höheres Moment zur Verfügung.
Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung, wie durch die Ansprüche definiert, zu verlassen. Zusätzlich können viele Modifikationen ausgeführt werden, ohne diesen zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Solldrehmoment, Fahrerwunschmoment
- 2: Ist-Drehmoment
- 2a: Saugsprung
- 2b: Turboloch
- 3: Drehmomentverlauf mit vorkonditioniertem Abgasturbolader
- 4: Drehmomentverlauf der elektrischen Maschine
- 4a: Boost-Betrieb
- 5: Drehmomentverlauf des Verbrennungsmotors
- E: Energieeintrag

## Patentansprüche

1. Verfahren zum Betrieb eines Kraftfahrzeugs, das von einem hybridisierten Antriebsstrang, umfassend einen von einem Abgasturbolader aufgeladenen Verbrennungsmotor und eine von einem elektrischen Energiespeicher gespeiste elektrische Maschine, angetrieben wird, wobei das Verfahren den folgenden Schritt umfasst:
Bestimmung mindestens einer Stelle auf einem vorausliegendem Streckenabschnitt des Fahrzeugs, an der voraussichtlich ein positiver Lastsprung an dem Verbrennungsmotor auftreten wird, wobei die mindestens eine Stelle in Abhängigkeit von Streckendaten des vorausliegenden Streckenabschnitts bestimmt wird (S1); und das Verfahren durch den folgenden Schritt gekennzeichnet ist:
Durchführung einer Lastpunktanhebung des Verbrennungsmotors vor Erreichen der mindestens einen Stelle, um ein verzögertes Hochlaufen (2b) des Abgasturboladers beim Lastsprung zumindest teilweise zu reduzieren, wobei die Lastpunktanhebung dem Verbrennungsmotor sowohl Leistung zur vollständigen Erfüllung des positiven Fahrerwunschmomentes als auch zum gleichzeitigen Laden des elektrischen Energiespeichers über einen generatorischen Betrieb der elektrischen Maschine bereitstellt (S3, S4).

2. Verfahren nach Anspruch 1, **dadurch gekennzeichnet, dass** die Lastpunktanhebung bis zum Erreichen oder bis kurz vor Erreichen der Stelle des vorhergesagten Lastsprungs aufrechterhalten wird.

3. Verfahren nach einem der vorhergehenden Ansprüche, **dadurch gekennzeichnet, dass** für jede der bestimmten mindestens einen Stelle ein Startpunkt (t1) berechnet wird, an dem die Lastpunktanhebung gestartet wird.

4. Verfahren nach einem der vorhergehenden Ansprüche, **dadurch gekennzeichnet, dass** die Lastpunktanhebung der Brennkraftmaschine nur durchgeführt wird, falls ein aktuelles Speicherniveau des elektrischen Energiespeichers einen vorbestimmten Ladezustandsschwellenwert unterschreitet und/oder im vorausliegenden Streckenabschnitt durch eine Betriebsstrategie oder ein Energiemanagement des Kraftfahrzeugs eine andere Verwendung der im elektrischen Energiespeicher gespeicherten Energie vorhergesagt wird (S2), wobei andernfalls anstelle der Lastpunktanhebung ein temporärer Boost-Betrieb der elektrischen Maschine mit Beginn des Lastsprungs gestartet wird, um das verzögertes Hochlaufen des Abgasturboladers beim Lastsprung zumindest teilweise zu reduzieren (S6).

5. Verfahren nach einem der vorhergehenden Ansprüche, **gekennzeichnet durch** einen Boost-Betrieb der elektrischen Maschine mit Beginn des Lastsprungs (S5).

6. Verfahren nach einem der vorhergehenden Ansprüche, **dadurch gekennzeichnet,**
(a) **dass** eine in den Abgasturbolader durch die Lastpunktanhebung eingetragene Energie so berechnet wird, dass ein am Getriebeeingang wirkender Momentenaufbau nach Beginn des Lastsprungs gemäß einer vorgegebenen Kennlinie erfolgt; und/oder
(b) **dass** eine Dauer der Lastpunktanhebung und eine Höhe eines generatorischen Moments der elektrischen Maschine während der Lastpunktanhebung so bestimmt wird, dass ein am Getriebeeingang wirkender Momentenaufbau nach Beginn des Lastsprungs gemäß einer vorgegebenen Kennlinie erfolgt und/oder dass der Abgasturbolader bei Eintritt des Lastsprungs bereits eine derart hohe Drehzahl aufgebaut hat, dass er unmittelbar einen Beitrag zur Erhöhung des Moments liefern kann.

7. Verfahren nach einem der vorhergehenden Ansprüche, **dadurch gekennzeichnet,**
(a) **dass** die Streckendaten, die zur Bestimmung der mindestens eine Stelle verwendet werden, topographische Streckeninformationen und/oder Gefälle-/Steigungsinformationen umfassen; und/oder.
(b) **dass** mittels der Streckungsdaten die mindestens eine Stelle anhand eines Beginns einer Steigung auf dem vorausliegenden Streckenabschnitt bestimmt wird.

8. Verfahren nach einem der vorhergehenden Ansprüche, **dadurch gekennzeichnet, dass** das Kraftfahrzeug ein Omnibus, vorzugsweise ein Linienbus ist, in dem eine Mehrzahl vorbestimmter Fahrstrecken oder Linien hinterlegt ist, wobei im Fahrbetrieb mittels einer Linienerkennung die aktuelle Fahrstrecke oder Linie erkannt wird und die mindestens eine Stelle in.Abhängigkeit von Streckendaten des vorausliegenden Streckenabschnitts der erkannten aktuellen Fahrstrecke bestimmt wird.

9. Steuervorrichtung zum Betrieb eines Kraftfahrzeugs, das von einem hybridisierten Antriebsstrang, umfassend einen von einem Abgasturbolader aufgeladenen Verbrennungsmotor und eine von einem elektrischen Energiespeicher gespeiste elektrische Maschine, angetrieben wird, **dadurch gekennzeichnet, dass** die Steuervorrichtung eingerichtet ist, das Verfahren nach einem der vorhergehenden Ansprüche durchzuführen.

10. Hybridfahrzeug, insbesondere Nutzfahrzeug, aufweisend eine Steuervorrichtung nach Anspruch 9.

## Claims

1. A method for operating a motor vehicle which is driven by a hybridized drive train, comprising an internal combustion engine which is charged by an exhaust gas turbocharger and an electric machine which is fed by an electric energy store, wherein the method comprises the following step:
determining at least one point on a route section of the vehicle lying ahead, at which point a positive load step is expected to occur at the internal combustion engine, wherein the at least one point is determined as a function of route data of the route section lying ahead (S1); and
the method is **characterized by** the following step:
raising a load point of the internal combustion engine before reaching the at least one point in order to at least partially reduce delayed running up (2b) of the exhaust gas turbocharger at the load step, wherein the raising of the load point provides the internal combustion engine both with power for completely satisfying the positive driver's request torque and for simultaneously charging the electrical energy store by means of a generator operation of the electric machine (S3, S4).

2. The method according to Claim 1, **characterized in that** the raising of the load point is maintained until, or until just before, the point of the predicted load step is reached.

3. The method according to one of the preceding claims, **characterized in that** the starting point (t1) at which the raising of the load point is started is calculated for each of the determined points or the at least one determined point.

4. The method according to one of the preceding claims, **characterised in that** the load point of the internal combustion engine is raised only if a current storage level of the electrical energy store undershoots a predetermined state of charge threshold value and/or if another use of the energy stored in the electrical energy store is predicted (S2) in the route section lying ahead by means of an operating strategy or an energy management system of the motor vehicle, wherein otherwise instead of the raising of the load point a temporary boost operation of the electrical machine is started at the start of the load step, in order to reduce (S6) at least partially the delayed running up of the exhaust gas turbocharger at the load step.

5. The method according to one of the preceding claims, **characterized by** a boost operation of the electrical machine at the start of the load step (S5).

6. The method according to one of the preceding claims, **characterized**
(a) **in that** energy which is input into the exhaust gas turbocharger by the raising of the load point is calculated in such a way that a torque increase which acts on the transmission input occurs after the start of the load step according to a predefined characteristic curve; and/or
(b) **in that** a duration of the raising of the load point and a level of a generator torque of the electric machine are determined during the raising of the load point in such a way that an increase in torque which acts on the transmission input takes place after the start of the load step according to a predefined characteristic curve, and/or in that when the load step occurs the exhaust gas turbocharger has already built up such a high rotational speed that it can directly make a contribution to increasing the torque.

7. The method according to one of the preceding claims, **characterized**
(a) **in that** the route data which is used to determine the at least one point comprises topographical route information and/or negative gradient/positive gradient information; and/or
(b) **in that** the route data is used to determine the at least one point on the basis of a start of a positive gradient on the route section lying ahead.

8. The method according to one of the preceding claims, **characterized in that** the motor vehicle is a bus, preferably a service bus, in which a multiplicity of predetermined routes or lines are stored, wherein in the driving operation the current route or line is detected by means of a line detection system and the at least one point is determined as a function of route data of the route section lying ahead on the detected current route.

9. A control device for operating a motor vehicle which is driven by a hybridized drive train, comprising an internal combustion engine which is supercharged by an exhaust gas turbocharger, and an electric machine which is fed by an electrical energy store, **characterized in that** the control device is configured to carry out the method according to one of the preceding claims.

10. A hybrid vehicle, in particular utility vehicle, having a control device according to Claim 9.

## Revendications

1. Procédé pour le fonctionnement d'un véhicule automobile qui est entraîné par une chaîne cinématique hybridisée, comprenant un moteur à combustion interne suralimenté par un turbocompresseur à gaz d'échappement et une machine électrique alimentée par un accumulateur d'énergie électrique, le procédé comprenant l'étape suivante :
détermination d'au moins un endroit sur une section de tronçon située en avant du véhicule, auquel un saut de charge positif se produira probablement au niveau du moteur à combustion interne, l'au moins un endroit étant déterminé en fonction de données de tronçon de la section de tronçon située en avant (S1) ; et
le procédé étant **caractérisé par** l'étape suivante :
réalisation d'une augmentation du point de charge du moteur à combustion interne avant d'atteindre l'au moins un endroit afin de réduire au moins en partie une accélération retardée (2b) du turbocompresseur à gaz d'échappement lors d'un saut de charge, l'augmentation du point de charge fournissant au moteur à combustion interne à la fois la puissance pour répondre complètement au souhait de couple positif du conducteur et pour charger simultanément l'accumulateur d'énergie électrique par le biais d'un fonctionnement de la machine électrique en tant que générateur (S3, S4).

2. Procédé selon la revendication 1, **caractérisé en ce que** l'augmentation du point de charge est maintenue jusqu'à l'obtention ou jusqu'à un instant juste avant l'obtention de l'endroit dudit saut de charge.

3. Procédé selon l'une quelconque des revendications précédentes, **caractérisé en ce que** pour chaque au moins un endroit déterminé, un point de départ (t1) est calculé, auquel l'augmentation du point de charge est commencée.

4. Procédé selon l'une quelconque des revendications précédentes, **caractérisé en ce que** l'augmentation du point de charge du moteur à combustion interne n'est effectuée que si un niveau d'accumulateur actuel de l'accumulateur d'énergie électrique est en dessous d'une valeur seuil d'état de charge et/ou si, dans la section de tronçon en avant, une autre utilisation de l'énergie accumulée dans l'accumulateur d'énergie électrique (S2) est prédite par une stratégie de fonctionnement ou une gestion d'énergie du véhicule automobile, sinon, au lieu de l'augmentation du point de charge, un fonctionnement de suralimentation temporaire de la machine électrique est commencé au début du saut de charge, afin de réduire (S6) au moins en partie l'accélération retardée du turbocompresseur à gaz d'échappement lors du saut de charge.

5. Procédé selon l'une quelconque des revendications précédentes, **caractérisé par** un fonctionnement de suralimentation de la machine électrique au début du saut de charge (S5).

6. Procédé selon l'une quelconque des revendications précédentes, **caractérisé en ce que** :
(a) une énergie introduite dans le turbocompresseur à gaz d'échappement par l'augmentation du point de charge est calculée de telle sorte qu'une augmentation de couple agissant au niveau de l'entrée de la transmission ait lieu après le début du saut de charge en fonction d'une courbe caractéristique prédéfinie ; et/ou
(b) une durée de l'augmentation du point de charge et une hauteur d'un couple générateur de la machine électrique pendant l'augmentation du point de charge sont déterminées de telle sorte qu'une augmentation de couple agissant à l'entrée de la transmission ait lieu après le début du saut de charge en fonction d'une courbe caractéristique prédéfinie et/ou de telle sorte que le turbocompresseur à gaz d'échappement, à l'entrée du saut de charge, ait déjà augmenté un vitesse de rotation suffisamment élevée pour qu'il puisse fournir immédiatement une contribution à l'augmentation de couple.

7. Procédé selon l'une quelconque des revendications précédentes, **caractérisé en ce**
(a) **que** les données de tronçon qui sont utilisées pour déterminer l'au moins un endroit comprennent des informations de tronçon topographiques et/ou des informations de descente/montée ; et/ou
(b) **qu'**au moyen des données de tronçon, l'au moins un endroit est déterminé à l'aide d'un début d'une montée sur la section de tronçon en avant.

8. Procédé selon l'une quelconque des revendications précédentes, **caractérisé en ce que** le véhicule automobile est un omnibus, de préférence un bus urbain, dans lequel est consignée une pluralité de tronçons de conduite ou de lignes prédéterminée, le tronçon de conduite actuel ou la ligne actuelle étant reconnu(e) pendant la conduite au moyen d'une reconnaissance de ligne et l'au moins un endroit étant déterminé en fonction de données de tronçon de la section de tronçon en avant du tronçon de conduite actuel reconnu.

9. Dispositif de commande pour le fonctionnement d'un véhicule automobile qui est entraîné par une chaîne cinématique hybridisée, comprenant un moteur à combustion interne suralimenté par un turbocompresseur à gaz d'échappement et une machine électrique alimentée par un accumulateur d'énergie électrique, **caractérisé en ce que** le dispositif de commande est prévu pour mettre en oeuvre le procédé selon l'une quelconque des revendications précédentes.

10. Véhicule hybride, en particulier véhicule utilitaire, présentant un dispositif de commande selon la revendication 9.
